# EUROPEAN PATENT SPECIFICATION

(11) **EP 1 624 351 B1**
(45) Date of publication and mention of the grant of the patent: **08.05.2013**
(21) Application number: 05016793.1
(22) Date of filing: 02.08.2005
(51) Int. Cl.: G05B 19/042, G05B 19/05

(54) **Dynamic schema for unified plant model**
Dynamisches Schema für ein einheitliches Anlagenmodell
Schéma dynamique pour un modèle unifié d'une installation

(30) Priority: 02.08.2004 US 909565
(43) Date of publication of application: 08.02.2006
(73) Proprietor: Rockwell Software Inc., West Allis, Wisconsin 53227 (US)
(72) Inventor: Hood, Gavan W., Upper Lockyer, Queensland 4352 (AU)
(74) Representative: Grünecker, Kinkeldey, Stockmair & Schwanhäusser

(56) References cited:
- US-B1- 6 446 202
- US-B1- 6 643 555
- PITZEK S ET AL: "Configuration and management of a real-time smart transducer network" EMERGING TECHNOLOGIES AND FACTORY AUTOMATION, 2003. PROCEEDINGS. ETFA '03. IEEE CONFERENCE SEPT. 16-19, 2003, PISCATAWAY, NJ, USA,IEEE, vol. 1, 16 September 2003 (2003-09-16), pages 407-414, XP010670457 ISBN: 0-7803-7937-3

## Description

### TECHNICAL FIELD

The present invention relates generally to industrial system automation, and more particularly to automatically configuring an industrial system based at least in part upon metadata associated with the system.

### BACKGROUND OF THE INVENTION

Advancements in computer technology and software have enabled communication to occur almost instantaneously. For example, through email an individual in New York can receive a document, image, message, or the like from an individual in California in a matter of seconds. Such advances in technology are not limited solely to communications, but directly or indirectly affect every business and individual. For instance, industrial control systems have enabled modem factories to become partially or completely automated in many circumstances, thereby reducing costs associated with the factory and consequently passing on such cost reduction to a consumer.

To further reduce costs of production, industrial systems have become increasingly automated. For example, programmable logic controllers (PLCs) can be coupled to various machinery and control a process that requires precise timing between actions of such machinery. Moreover, as communications technology has continued to advance, intercommunication across geographic boundaries has enabled growth of distributed manufacturing environments. For instance, a first plant in a first geographic location can be utilized to manufacture a window frame, while a second plant in a second geographic location can be employed to manufacture a corresponding window. Obviously, inefficiencies in manufacturing would result if a far greater number of windows were created than doorframes, as an excess of windows would exist. For example, storage for maintaining the excess windows may be required, dispensing with or recycling the windows may be required, and/or altering the generated windows to meet design specifications for a disparate window frame may be required. These and other costs are often associated with manufacturing system that do not have an efficient communication/automation system associated therewith.

Systems and methodologies to facilitate automation across geographic/industrial system boundaries have been developed and implemented in various factory settings. Such systems and methodologies, however, are typically rules-based and are not flexible with altering requirements of a manufacturing environment. For example, a manufacturing device that replaces an outdated manufacturing device within a system may not be compatible with other devices in such system given a desired process. Accordingly, an expert in computer programming and one familiar with the system/device is required to render the device compatible with other devices within the system as well as the computer platform that enables automation. Requiring this extra implementation of a device into an existing system results in downtime of the system, lost man-hours, and additional cost of the programmers that enable implementation. Similarly, implementing a new process while utilizing existing equipment can require a substantial amount of time.

Further, communications/computerized components employed in connection with industrial automation systems may not be properly configured to properly deliver databases and/or database entries to a user. For example, an industrial automation system may be configured to generate a database according to a proprietary internal format. Such database, however, may be desirably displayed in a format that can be viewed from remote locations, wherein such remote locations have not been updated according to the proprietary format. In conventional industrial automation systems, this alteration of database formats requires a computer programmer to generate code specifically for the transformation between formats. Such programming is rule-based, and does not adapt well to altering conditions of an industrial system. Further, if the databases are dynamically created (e.g., the databases receive a constant flow of data from sensors, machinery, input from operators, ...), a schema mapping from a first format to a second format must be robust and adaptive, and again requires programming by an expert.

Accordingly, there exists a need in the art for a system and/or methodology for automatically configuring an industrial automation system while mitigating needs for expert programming services.

US 6 643 555 B1 relates to system and methods for generating an application for a control system. A control process is defined by a physical model and a topological model. An application generator utilizes the physical and topological models to generate an application for the control system. A physical model of the control process is defined. The physical model having a structure, this structure having a hierarchy of levels comprising at least one device. A topological model of the control process is also defined. The topological model having an architecture comprising a controller and a human machine interface. The physical and topological models are analyzed. The physical and topological models are input into a generator and an application for the control system is generated.

Pitzek, S. et al.: "Configuration and Management of a Real-Time Smart Transducer Network", Emerging Technologies and Factory Automation, 2003, Proceedings ETFA '03, IEEE Conference, September 16-19, 2003, Piscataway, NJ, USA, IEEE, vol. 1, 16 September 16, 2003, pages 407-414. This document describes configuration and management aspects in the area of dependable real-time fieldbus systems. It proposes a configuration and management framework for a low-cost real-time fieldbus network. The framework uses formal XML descriptions to describe node and network properties in order to enable a data representation that comes with low overhead on nodes and enables the easy integration with software tools. The framework builds on the infrastructure and interfaces defined in the OMG smart transducers interface standard.

US 6 446 202 B1 presents a configuration system for use in a process control network having a controller, a first device network that communicates using a first input/output protocol, such as a Fieldbus or a HART device protocol, and an AS-Interface device network that communicates using an AS-Interface input/output communication protocol includes a configuration database that stores configuration information pertaining to the first device network and configuration information pertaining to the AS-Interface device network, a data access routine that automatically requests configuration information pertaining to the first device network and configuration information pertaining to the AS-Interface device network and a configurator that configures the AS-Interface device network based on the AS-Interface device network configuration information.

### SUMMARY OF THE INVENTION

The object of the present invention is to provide a system and a method that provides automatic reconfiguration of an industrial system.

This object is solved by the subject matter of the independent claims.

Preferred embodiments are defined by the dependent claims.

The following presents a simplified summary of the invention in order to provide a basic understanding of some aspects of the invention. This summary is not an extensive overview of the invention. It is intended to neither identify key or critical elements of the invention nor delineate the scope of the invention. Its sole purpose is to present some concepts of the invention in a simplified form as a prelude to the more detailed description that is presented later.

The present invention provides a system and/or methodology for automatically configuring an industrial system. Benefits of the present invention include configuration of industrial device(s)/process(es) without requiring manually programming interfacing therebetween. Further, the present invention provides for automatic generation and structuring of databases to be employed in connection with an industrial environment. For example, it may be desirable to store data relating to an industrial environment within a database that can be viewed at disparate locations. Accordingly, an XML database or the like may be desirable to allow for viewing with a conventional browser. Moreover, it may be desirable to store an industrial automation platform in a data store of a particular format.

The above and other benefits can be accomplished by utilizing metadata in connection with intelligent components that structure and analyze such metadata. The metadata can be utilized to define/describe relationships and/or resources between physical device(s) within an industrial environment, process(es) within an industrial environment, resources between software objects and/or applications, associations between software objects and/or applications, and the like. Further, the metadata cannot only describe relationships between objects that do not inherit from one another, but can further describe inheritance relationships between various objects. Thus, metadata can exist that robustly describes the industrial environment, and enables generation of a robust representation of the industrial environment.

Such a robust metadata-driven representation enables automatic configuration of software applications as well as configuration of physical device(s) and/or process(es) within the industrial system. For instance, a user can request that a particular process be configured and implemented. An analysis component can analyze the metadata existent within the system and automatically configure physical device(s) required to implement the requested process. Further, an analysis of the metadata enables generation of software objects required for the desirable implementation, and database generation and structuring that is utilized to store/analyze data relating to the requested process. Such automatic configuration is a substantial benefit over conventional industrial automation systems, which require manual programming of software required for implementation.

In accordance with another aspect of the present invention, metadata can be collected according to particular users. For example, user identity, user access privileges, etc. can be defined/described within the metadata. Thereafter, when the user desires to view data within the automation platform of the present invention, filters can be dynamically created that provide the user with only pertinent data. Such filters are beneficiary due to robustness of the industrial system representation. Specifically, if the user were provided with all data relating to the entire industrial system he would be overwhelmed due to massive quantities of such data. Further, these filters can be built directly into the metadata, enabling them to be adaptive over time with respect to alterations in the industrial system and alterations with respect to users.

Moreover, a controller that is employed to control one or more device(s)/process(es) within an industrial automation environment can utilize metadata associated with the present invention. For example, a controller can be provided with metadata that describes/defines the industrial system, and thereafter utilize such metadata to control industrial machine(s)/process(es). As more metadata is generated and accessible to the controller, more intelligent control decisions can be made. The controller can quickly locate desirable metadata by analyzing associations defined in the metadata. For example, a links table can be provided to enable the controller to quickly locate and utilize metadata in connection with controlling an industrial machine/process.

### BRIEF DESCRIPTION OF THE DRAWINGS

Fig. 1 is a high-level block diagram of a system that facilitates automatic configuration of at least a portion of an industrial system in accordance with an aspect of the present invention.

Fig. 2 is a block diagram of a system that facilitates automatic configuration of at least a portion of an industrial system in accordance with an aspect of the present invention.

Fig. 3 is a block diagram of a system that facilitates automatic configuration of at least a portion of an industrial system in accordance with an aspect of the present invention.

Fig. 4 is a block diagram of a system that facilitates automatic configuration of at least a portion of an industrial system in accordance with an aspect of the present invention.

Fig. 5 is a flow diagram illustrating a methodology for automatically configuring at least a portion of an industrial system in accordance with an aspect of the present invention.

Fig. 6 is a flow diagram illustrating a methodology for filtering data within a metadata driven automation platform in accordance with an aspect of the present invention.

Fig. 7 is a flow diagram illustrating a methodology for automatically generating a database in connection with an industrial environment in accordance with an aspect of the present invention.

Fig. 8 is a flow diagram illustrating a methodology for automatically configuring at least a portion of an industrial environment in accordance with an aspect of the present invention.

Fig. 9 is a flow diagram illustrating a methodology for declaring an application and automatically configuring an automation platform based at least in part upon the declaration.

Fig. 10 is an exemplary transformation of an automation platform from a first format to a second format in accordance with an aspect of the present invention.

Fig. 11 is an exemplary filtering embodiment in accordance with an aspect of the present invention.

Fig. 12 is an exemplary automation platform that automatically updates association/resources between objects in accordance with an aspect of the present invention.

Fig. 13 is an exemplary embodiment illustrating control of a plurality of industrial devices in accordance with an aspect of the present invention.

Fig. 14 is an exemplary configuration of a plurality of devices in accordance with an aspect of the present invention.

Fig. 15 illustrates an exemplary manner in which metadata can be employed in connection with a controller in accordance with an aspect of the present invention.

Fig. 16 illustrates data collection in connection with a controller in accordance with an aspect of the present invention.

Fig. 17 illustrates a distributed industrial system utilizing a metadata store to control device(s)/process(es) within the distributed industrial system in accordance with an aspect of the present invention.

Fig. 18 is an exemplary operating environment in which the present invention can function.

Fig. 19 is an exemplary computing environment that can be employed in connection with the present invention.

### DETAILED DESCRIPTION OF THE INVENTION

The present invention is now described with reference to the drawings, wherein like reference numerals are used to refer to like elements throughout. In the following description, for purposes of explanation, numerous specific details are set forth in order to provide a thorough understanding of the present invention. It may be evident, however, that the present invention may be practiced without these specific details. In other instances, well-known structures and devices are shown in block diagram form in order to facilitate describing the present invention.

As used in this application, the terms "component," "handler," "model," "system," and the like are intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a server and the server can be a component. One or more components may reside within a process and/or thread of execution and a component may be localized on one computer and/or distributed between two or more computers. Also, these components can execute from various computer readable media having various data structures stored thereon. The components may communicate *via* local and/or remote processes such as in accordance with a signal having one or more data packets (*e.g*., data from one component interacting with another component in a local system, distributed system, and/or across a network such as the Internet with other systems *via* the signal).

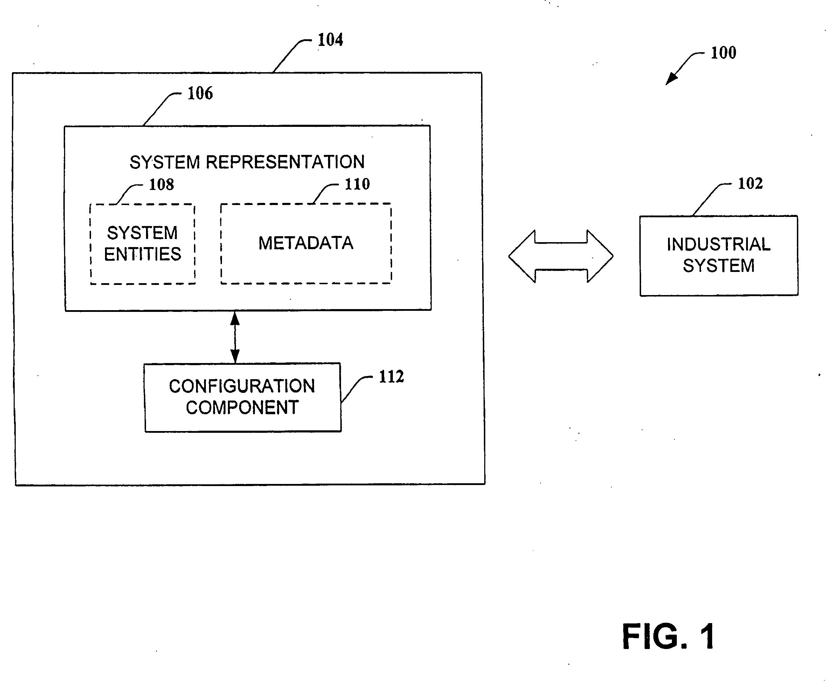

Referring now to the drawings, Fig. 1 illustrates a high-level system overview in connection with one particular aspect of the subject invention. The present invention relates to a novel system 100 that facilitates automation of one or more of a manufacturing process and/or entity. Factory automation is often accomplished at least in part by a software vendor providing a framework for a manufacturing system, and a customer requesting that such framework be adapted/completed according to their particular manufacturing needs. Accordingly, alterations in a manufacturing system/process require the software vendor to modify the software to accommodate the aforementioned alterations. Further, proprietary machinery often needs specialized configuration to enable it to effectively communicate with a controller as well as other machinery within the manufacturing system. The system 100 is employed to provide a common model for manufacturing factories (plants) from a system perspective shared across software vendor and customer applications. Further, the common model that is facilitated by the present invention can span all industry segments.

The system 100 includes an industrial system 102 and an automation platform 104 that comprises a representation 106 of the industrial system. The industrial system 102 can include various industrial machinery (e.g., pumps, presses, conveyors,...), programmable logic controllers (PLCs), switches, sensors, servers, databases, or any other suitable software/device that can be used in connection with an industrial system. The representation 106 effectively represents entities 108 within the industrial system 102 by employing metadata 110 associated with the industrial system 102 as well as software objects that are employed to represent such industrial system 102. Metadata is data that describes data. Conventionally, metadata has been employed in connection with the World Wide Web due to a need to locate particular information amongst a massive amount of information. The system representation 106 is more intelligent and adaptive than conventional database representations of industrial systems, as the metadata 110 can expand and change with system alterations without requiring an expert programmer. The metadata 110 includes data that defines associations between the system entities 108 within the automation platform 104 (and within the industrial system 102). The metadata 110 can further include definitions of industrial processes that occur within the industrial system 102, and the system entities 104 can include representations of such processes. More particularly, the system entities 108 within the system representation 106 can include objects that represent disparate industrial processes, industrial machinery, servers, etc., and the metadata 110 can further define such objects. Furthermore, a collection of objects can be employed to represent disparate processes/machinery within the industrial system 102. Thus, it is understood that the system representation 106 is not limited to a specific manner of representing the industrial system 102, and that any suitable manner of representation is contemplated by the present invention.

A configuration component 112 analyzes the system representation 106 and configures the industrial system 102 in accordance with such analysis. The configuration component 112 is an intelligent component that configures the industrial system 102 and/or the system representation 106 based at least in part upon the metadata 110. In accordance with one aspect of the present invention, sensor(s) within the industrial system can determine existence of a new or altered piece of machinery, and inform the automation platform 104 of such addition. The configuration component 112 can thereafter analyze the system representation 106 to automatically configure the machinery in accordance with the metadata 110 that describes the industrial system 102. For example, the new/altered machinery can itself include metadata that is delivered to the automation platform 104 *via* a suitable network connection, and the metadata relating to the machinery can be added to the existent metadata 110. In accordance with another aspect of the present invention, metadata associated with machinery can be manually entered in by an operator/user of the automation platform 104. For instance, existence of a new piece of machinery can be detected, and the configuration component 112 can prompt a user to enter metadata relating to the piece of machinery. Particularly, the configuration component 112 can determine metadata required to configure the machinery, and provide a template or other suitable data entry mechanism to a user. Upon receiving the requested metadata, the configuration component 112 can configure the industrial system 102 *via* the system representation 106.

Furthermore, the configuration component 112 can automatically generate user interfaces in accordance with the metadata 110 as well as interfaces that facilitate data exchange between the industrial system 102 and the system representation 106. For instance, the metadata 110 can include information relating to a particular user of the automation platform 104, such as user identity, user privileges, user activities, and other suitable information that can be utilized in connection with creating an appropriate user interface. Therefore, a customized user interface can be automatically generated by the configuration component 112.

Moreover, the configuration component 112 can be employed to automatically structure databases for use when collecting data relating to the industrial system 102. For example, the industrial system 102 can include a plurality of sensors and can generate a substantial amount of data relating to manufacturing system(s)/process(es). Conventionally, collecting such data required a substantial amount of manual programming to generate a database structure suitable for the particular data collected, resulting in wasted man-hours. The system 100 enables a user to request data collected from a particular machine, set of machines, and/or process, and the configuration component 112 automatically generates a database structure that collects data in accordance with the request. The configuration component 112 can utilize the system representation 106 to determine machinery, sensor(s), and the like within the industrial system 102 that should be monitored to acquire the desired data. For example, the configuration component 112 can receive a request from a user to configure the physical system 102 for a specific process, and structure a database that collects data relating to that process. Based upon the system representation 106 in general, and the metadata 110 in particular, the industrial system 102 can be automatically configured for a desired process. Further, databases that are employed in connection with monitoring the process and controlling the process can be automatically structured to collect/organize data associated with the process. The generated databases can be in any suitable format, including SQL, XML, and any other suitable database format/language. In accordance with one aspect of the present invention, the system 100 can facilitate transformation of a database from a first structure/language (SQL) to a disparate structure/language (XML) to enable viewing of the data on a browser.

In accordance with yet another aspect of the present invention, the automation platform 104 is an extensible automation platform, wherein the metadata 110 expands as the industrial system 102 is utilized. This enables the automation platform 104 to more intelligently and efficiently configure the industrial system 102 over time as more metadata is generated/added to the metadata 110 within the system representation 106. Further, controllers utilized to control machinery/process(es) within the industrial system 102 can utilize the metadata 110 in connection with system control, thereby rendering such controllers adaptive to changing conditions within the industrial system 102.

In accordance with one aspect of the present invention, the automation platform 104 can be developed in a form of an XML schema (rather than a database), and from such schema the industrial system 102 can be configured and database generation associated with the industrial system 102 can be accomplished. Further, a standard that facilitates data exchange and semantics associated with data exchange can be employed in connection with the XLM schema. For example, ISA 95, ISA 88, and any other suitable standard employed in connection with manufacturing can be utilized to facilitate creation of the XML schema (and consequently the automation platform 104). The standards can be employed in connection with data exchange between machinery and the automation platform 104 as well as between customer and vendor applications.

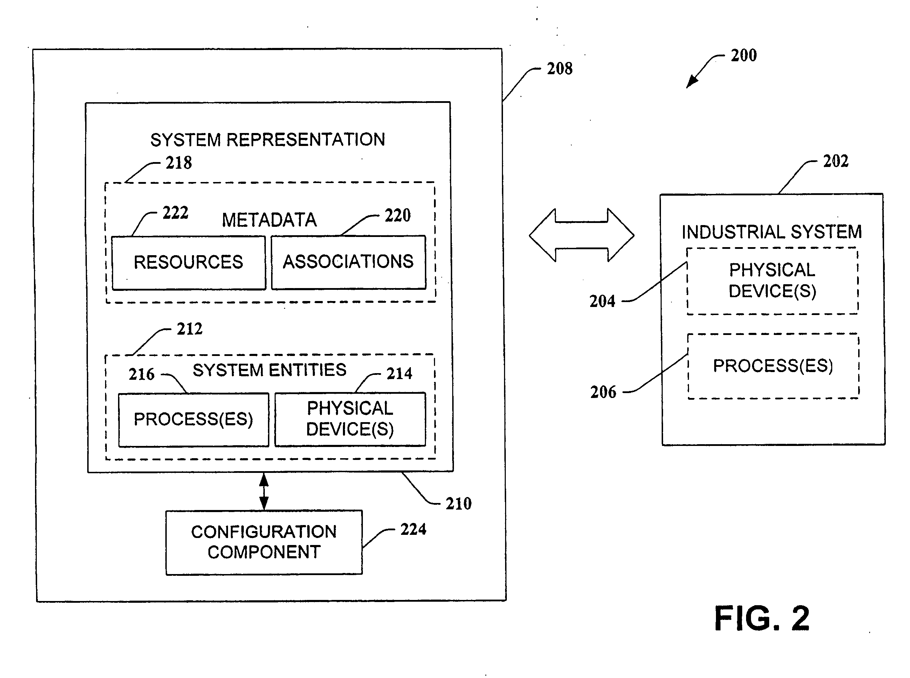

Now turning to Fig. 2, a system 200 that facilitates automatic configuration of an industrial system 202 is illustrated. The industrial system 202 includes physical device(s) 204 such as machinery, PLCs, racks, cables and various other entities associated with manufacturing systems. The physical device(s) 204 can also include computer-related items, such as hubs, a network connection, servers, data stores, and other suitable computer-related items. Thus, the physical device(s) 204 include any physical entity that can be resident within the industrial system 202. The industrial system 202 further includes process(es) 206 that are undertaken within the industrial system 202. For example, a plurality of the physical device(s) 204 can operate in conjunction to complete one of the process(es) 206 within the industrial system 202.

The industrial system 202 (e.g., the physical device(s) 204 and/or the process(es) 206) is automatically configured *via* an automation platform 208. The automation platform includes a system representation 210, wherein system entities 212 are represented by data structures (e.g., one or more objects). Particularly, the system entities 212 include physical device(s) 214 and process(es) 216 that represent the physical device(s) 204 and the process(es) 206, respectively, within the industrial system 202. The system representation 210 further includes metadata 218 that describes data/objects employed to represent the system entities 212. Particularly, the metadata 218 includes associations 220 that define relationships amongst the physical device(s) 214, relationships amongst the process(es) 216, and relationships between the physical device(s) 214 and the process(es) 216. Furthermore, the associations 220 can define relationships between software object(s)/entities that represent the physical device(s) 214 and the process(es) 216, as well as relationships amongst data that is employed to generate interfaces and/or exchange data. Thus, the associations 220 within the metadata 218 can define/describe any suitable association existent within the industrial system 202 and/or the system representation 210.

The metadata 218 further includes resources 222 that define/describe resources available/utilized within the industrial system 202 and/or the system representation 210. For example, the resources 222 can describe available bandwidth in a network connection, machine resources within the industrial system 202, available switches that facilitate communication between machinery, and/or any other suitable resource that is found within the industrial system 202. Moreover, the resources 222 can include computer-related resources, such as processing resources, data storage resources, resources associated with particular objects, etc.

The automation platform 208 further includes a configuration component 224 that intelligently configures the industrial system 202 based at least in part upon the system representation 210. More particularly, the configuration component 224 analyzes the system entities 212 and the associations 220 and the resources 222 associated with the system entities 212 and configures the corresponding industrial system 202 in accordance with the analysis. In accordance with one aspect of the present invention, the configuration component 224 can configure the industrial system 202 based at least in part upon a user request. For example, an operator may desirably configure a subset of the industrial system 202 to effectuate a particular process. The automation platform 208 can generate a graphical user interface that enables a user to adequately describe/define the desired process. The configuration component 224 can analyze the physical device(s) 214 and current process(es) 216 together with the associations 220 and the resources 222, and thereafter configure the industrial system 202 in accordance with the analysis. Furthermore, the automation platform 208 can retain metadata associated with the requested process, thereby enabling the automation platform 208 to be an extensible automation platform. Thus, for example, a process need only be configured once, and can later be re-used if desired. Moreover, database(s) relating to the configured industrial system 202 can be automatically structured and generated for utilization and analysis. For instance, databases that are accessed by a controller to facilitate optimal control of the physical device(s) 204 and/or process(es) 206 can be automatically generated and maintained by the automation platform 208.

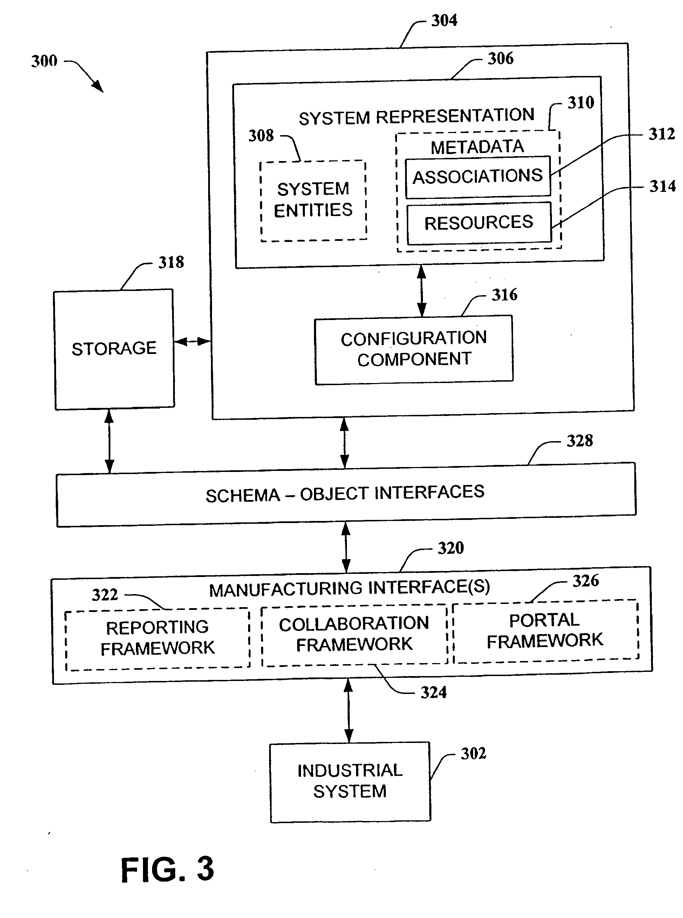

Now referring to Fig. 3, a system 300 that facilitates automatic configuration of an industrial system 302 is illustrated. The system 300 further provides a mechanism for exchanging data between customer and vendor applications. The system 300 includes an automation platform 304 that is employed to configure machinery/process(es) within the industrial system 302. The automation platform 304 can further be employed to automatically generate database structures that are utilized in connection with collecting and/or analyzing data output from the industrial system 302. The automation platform includes a system representation 306 that is employed to represent the industrial system 302. For example, the system representation can include system entities 308, wherein such system entities 308 can comprise representations of machinery within the industrial system 302, representation of process(es) that are undertaken within the industrial system 302, or any other suitable entity within the industrial system 302 that can be represented. The system representation 306 further includes metadata 310, wherein the metadata at least describes/defines associations 312 amongst and/or between the system entities 308 as well as resources 314 within the industrial system 302 collectively and/or system entities 308 individually.

The automation platform 304 further includes a configuration component 316 that automatically configures the industrial system 302 based at least in part upon the system representation 306 in general, and the metadata 310 that describes the industrial system 302 in particular. For example, a user could define a particular process that is desirably completed within the industrial system 302 by inputting such process into the automation platform 304. A representation of the process is generated based upon the declared desired process, and the configuration component 316 updates the system representation 306 in accordance with the declared process and the metadata 310. The configuration component 316 can thereafter automatically generate code that enables the industrial system 302 to configure itself for completion of the process. Moreover, the configuration component 316 can automatically generate databases or other suitable storage structures and store such data along with generated code in a storage unit 318.
For example, the storage unit 318 can store AJAX Command Definition (ACD) file(s), XML schemas/files, can store the automation platform 304, or any other suitable data. Further, the storage unit 314 can include an external data store that is accessible over a suitable network. Thus, the present invention can employ data from disparate geographic locations as well as configure industrial systems that are remotely located from the storage unit 318.

The automation platform 304 can communicate with the industrial system 302 *via* one or more manufacturing interface(s) 320. For example, the manufacturing interface(s) 320 can include a reporting framework 322 that facilitates reporting on occurrences within the industrial system, a collaboration framework 324 that enables machinery within the industrial system to collaborate to complete a process, and a portal framework 326 that facilitates communication between the industrial system 302 and the automation platform 304. For example, the collaboration framework 302 can include one or more adaptors, and the portal framework 326 can include one or more adaptors and/or one or more portlets. The reporting framework 322, the collaboration framework 324, and the portal framework 326 can be developed and applied independently in a free-forming environment. The present invention provides such manufacturing interface(s) with a schema 328 that enables automation of various parts of the manufacturing interface(s) as well as process(es) within the industrial system. In accordance with one aspect of the present invention, a known standard can be employed in connection with the schema 328 to provide common semantics across the system 300. Particularly, ISA 95 and/or ISA 88 can be employed in connection with the present invention.

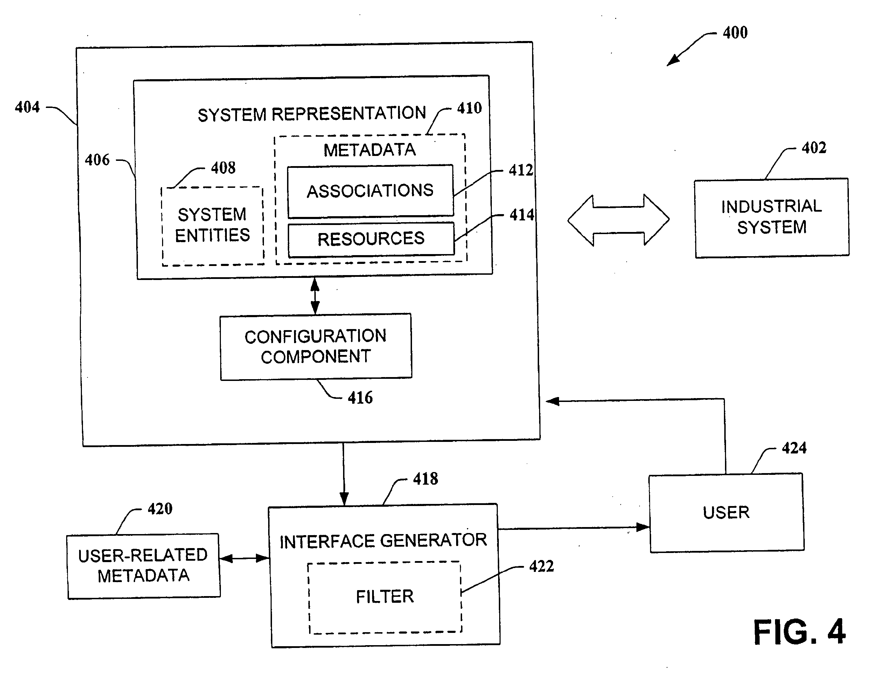

Turning now to Fig. 4, a system 400 that facilitates automatic configuration and operation of an industrial system 402 is illustrated. The system 400 includes an automation platform 404 that comprises a representation 406 of the industrial system 402. The system representation 406 can include system entities 408 (e.g., machinery and/or process(es)) and metadata 410 that further describes the industrial system 402 (and consequently the system entities 408). Particularly, the metadata 410 defines/describes associations 412 amongst and/or between the system entities 408 as well as resources 414 of the industrial system 402 in general and/or the system entities 408 individually. Utilizing the metadata 410 provides a more complete and intelligent representation of the industrial system 402 when compared with conventional database models.

The automation platform 404 further includes a configuration component 416 that automatically configures the industrial system 402. The configuration is based at least in part upon the associations 412 and the resources 414 within the metadata 410. For example, the industrial system 402 can be automatically configured for a process, together with database generation to store data relating to the process. Moreover, the configuration component can be associated with a schema that facilitates transformation of databases and contents thereof into a desirable format (e.g., XML to enable browser viewing of such data).

The system 400 further includes an interface generator 418 that automatically generates a customized interface according to user-related metadata 420. For example, the user-related metadata 420 can include user identity, user privileges, geographic location of a user, or any other suitable information that relates to a user. The interface generator 418 can access such metadata 420 and filter portions of the system representation 406 that are not required by a user 424 associated with the metadata 420. A substantial amount of metadata is utilized to represent the industrial system 402 - thus, displaying this metadata to the user 424 would be overwhelming to such user 424 and unproductive. Thus, the interface generator 418 reduces data delivered to the user 424 *via* the filter to provide such user 424 with a manageable amount of data. Consequently, applications should appear as simple to a user as if the system representation 406 was a conventional database representation. Further, the applications utilized in connection with the automation platform 404 will be more manageable because they can take advantage of the metadata 410 and 420 to automate tasks and make intelligent decisions. Further, it is understood that while the interface generator 418, filter 422, and user-related metadata 420 are shown separate from the automation platform 404, the automation platform (schema) can include within it the interface generator 418, filter 422, and/or user-related metadata 420. Thus, filters can be declared directly in the metadata. Accordingly, the filter 422 is metadata-driven and not structure-driven, thereby rendering filters adaptive to changing users and/or industrial system alterations.

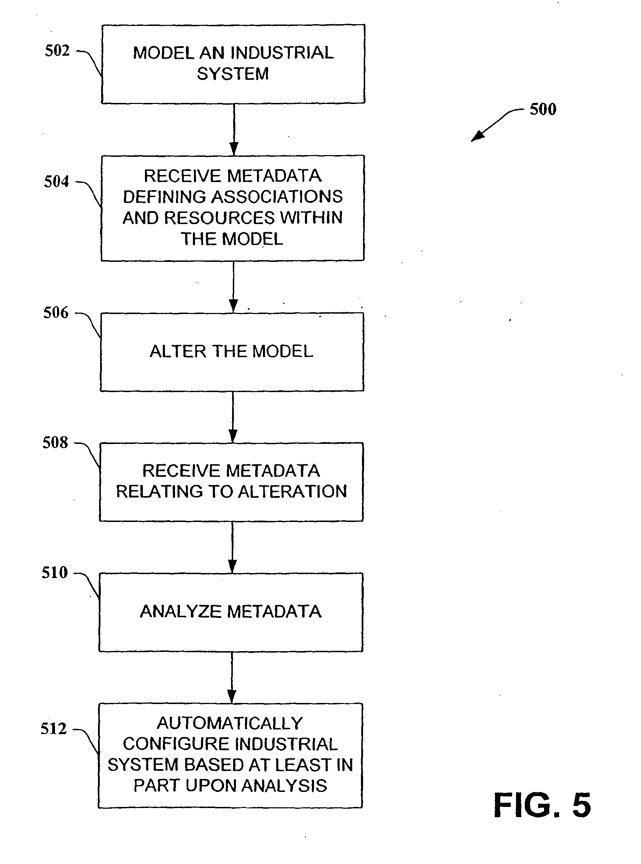

Referring now to Fig. 5, a methodology 500 for utilizing metadata to automatically configure an industrial system is illustrated. While, for purposes of simplicity of explanation, the methodology 500 is shown and described as a series of acts, it is to be understood and appreciated that the present invention is not limited by the order of acts, as some acts may, in accordance with the present invention, occur in different orders and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the present invention.

At 502, an industrial system is modeled. For example, systems and/or processes can be modeled by a plurality of objects with disparate types. While object-oriented-programming can be utilized in accordance with one aspect of the present invention, it is to be understood that any suitable technique for modeling an industrial system can be employed. Further, the model can include software applications that are employed in connection with an industrial system. For instance, particular manufacturers may have specific applications that are employed in connection with a manufacturing process. These applications can be represented within the industrial system model.

At 504, metadata defining associations and resources within the industrial model is received. The received metadata can include a links table that defines associations between particular objects/types within the model. Further, the metadata can define/describe physical machinery within the industrial system and associations between such physical machinery as well as associations between process(es), process(es) and machines, or any other suitable relationships within an industrial system. Moreover, the received metadata can define/describe relationships between software applications utilized in connection with the industrial system, databases within the industrial system, computer resources within the industrial system, etc. Similarly, the metadata can describe computing resources and/or industrial resources within the industrial system. Thus, a robust description of an industrial system can be generated based upon the metadata.

At 506, the model is altered. For example, a particular piece of industrial machinery can be modified, added, updated, replaced, removed, or any other suitable operation. In accordance with another aspect of the present invention, the model can be altered according to a desired change within the industrial system and/or to reflect updates in hardware/software. At 508, metadata associated with the alteration is received. For example, if machinery is removed, sensors can notice such removal and generate metadata relating to the removal (e.g., updated associations, updated resources, ...). In another example, a software application can be updated, and metadata relating to the update can be extracted and received.

At 510, the collection of metadata is analyzed with respect to the alteration in the model. For example, an intelligent configuration component can review the metadata with respect to the altered model, and at 512 automatically configure the industrial system in accordance with the analysis. For instance, upon review and analysis of the metadata, the configuration component can automatically generate software to be employed in a PLC that effectively controls one or more machines for a particular process. Further, the configuration component can automatically create user interfaces, databases, and any other suitable software that requires generation to effectuate configuration of the system as well as automation thereof.

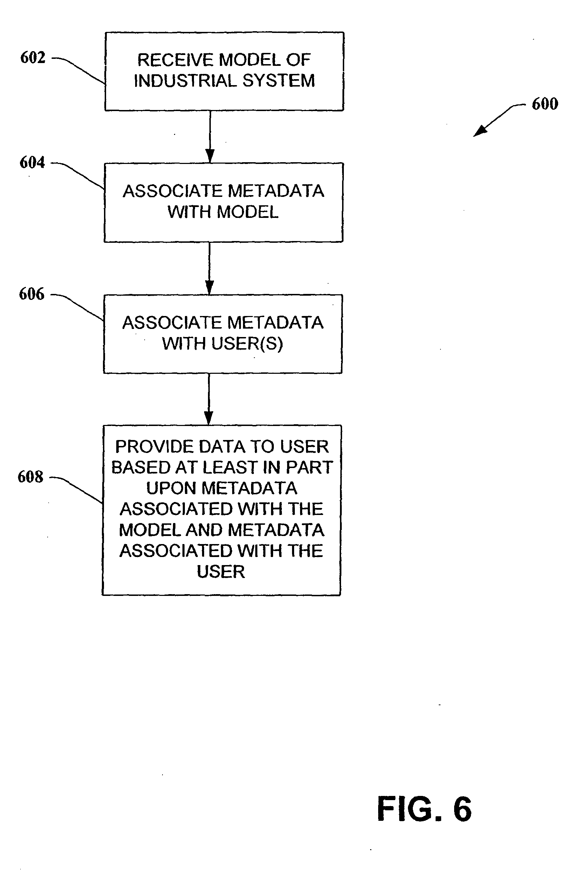

Turning now to Fig. 6, a methodology 600 for filtering data within a robust system representation and providing such filtered data to a user is illustrated. At 602, a model of an industrial system is received. For example, the model can utilize various objects of disparate classes and types to represent the industrial system. For instance, one or more objects can represent one or more machines and/or processes within the industrial system. At 604, metadata is associated with the model. Particularly, the model includes metadata that defines and/or describes associations between machinery within the industrial system. For example, the metadata can describe processes undertaken by machinery and how such machinery interacts to facilitate automation of the processes. Moreover, the model includes metadata that defines and/or describes resources existent within the industrial system (e.g., available machinery, capacity of machinery, PLC processing capabilities, ...). In accordance with another aspect of the present invention, metadata within the model describes data utilized to generate the model. For instance, various objects can be employed to facilitate representation of the industrial system. The metadata can define and/or describe relationship(s) between such objects as well as resources associated with the objects.

At 606, metadata is associated with one or more user(s). For example, metadata describing a user's identity, user privileges, user location, or any other suitable information relating to a user can be collected and employed within the methodology 600. The metadata can be manually generated through a template or a series of automatically generated interrogatories that request particular information from the user. Further, this metadata can be generated automatically by watching a user over time and providing a component that makes inferences relating to the user. As used herein, the term "inference" refers generally to the process of reasoning about or inferring states of the system, environment, and/or user from a set of observations as captured *via* events and/or data. Inference can be employed to identify a specific context or action, or can generate a probability distribution over states, for example. The inference can be probabilistic - that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources. Various classification schemes and/or systems (e.g., support vector machines, neural networks, expert systems, Bayesian belief networks, fuzzy logic, data fusion engines...) can be employed in connection with performing automatic and/or inferred action in connection with the subject invention. Thus, for example, a component can infer that a user is associated with particular access privileges by watching which applications the user typically accesses.

At 608, data is provided to the user based at least in part upon the metadata associated with the model and the metadata associated with the user. This data is less than the entire industrial system model, as delivering such data to a user would be overwhelming due to the substantial amount of metadata that describes the industrial system and/or platform. The data can be delivered to the user *via* a graphical user interface (GUI). For instance, a hierarchical representation of a subset of the industrial system can be provided to the user, wherein the subset is pertinent to the user's activities within the industrial system. Moreover, organization by process, location, machinery, or any other suitable organization can be projected to the user in accordance with the aforementioned metadata. In accordance with one aspect of the present invention, the metadata itself can declare filters for particular users (e.g., the filters can be declared directly within the metadata). Such filtering is an advancement over conventional filters, as conventional filters required manual entering of disparate views associated with disparate users. The metadata in connection with the model enables automatic generation of views associated with users, as given common semantics amongst the metadata databases utilized for delivering data to particular users can be automatically generated.

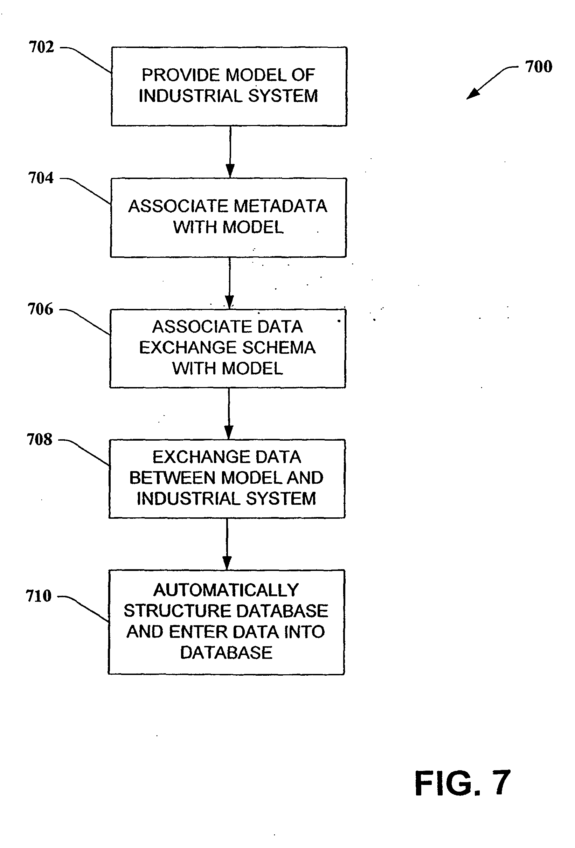

Now referring to Fig. 7, a methodology 700 for automatically generating and configuring a database relating to an industrial system is illustrated. At 702, a model of an industrial system is provided. At 704, metadata is associated with the model. In particular, the metadata defines/describes associations and resources relating to the industrial system, as well as associations and resources amongst software objects that are employed within the model. At 706, a data exchange schema is associated with the model. For example, ISA 95 can be employed in connection with the model to facilitate communications between the model and the industrial system represented by the model. Particularly, the data exchange schema can include transforming components that transform code within the model to code readable by entities within the industrial system (e.g., PLCs).

At 708, data is exchanged between the model and the industrial system based upon a particular process implemented within the industrial system and modeled within the model. For a simplistic example, a counter can be employed by a piece of machinery, and such numbers can be delivered to the model for storage and/or analysis. At 710, a database is automatically structured and data is entered into such structured database. In conventional data acquisition systems/methodologies within industrial environments, acquiring data requires manually creating a database structure prior to implementation of a new process. The methodology 700 can be employed to automatically generate a database structure that receives data relating to a new process. For instance, the model and metadata associated therewith can be employed to automatically configure an industrial system for a particular process. Further, databases that store information relating to the process can be automatically generated based at least in part upon the aforementioned metadata, thereby increasing manufacturing efficiency. Upon structuring of the database, data acquired from the process *(e.g., via* sensors) is directed to the database for appropriate storage. Further, the database can be structured according to user desires. For instance, the database can be automatically configures as an XML database.

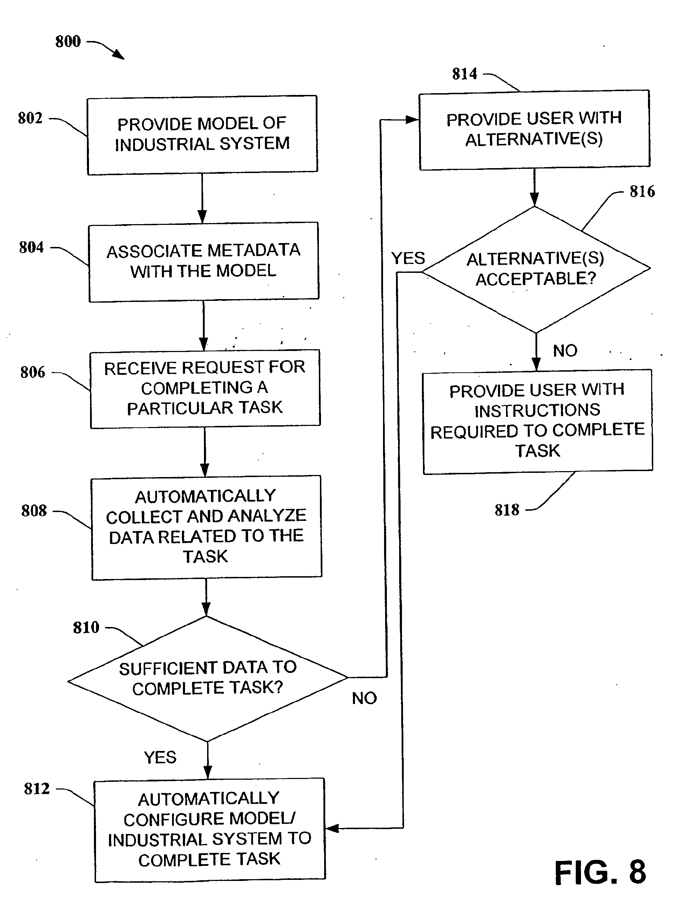

Now turning to Fig. 8, a methodology 800 that facilitates configuration of a portion of an industrial system is illustrated. At 802, a model of an industrial system is provided. For example, the model can include representations of process(es) and/or machinery within the industrial system. In accordance with one aspect of the present invention, object-oriented programming can be utilized in connection with creating the model. At 804, metadata is associated with the model. The metadata defines and/or describes associations and resources related to the industrial system as well as associations and resources related to the industrial model. At 806, the model can receive a request for a particular task. For example, the model can receive a request for automatically configuring a plurality of machines to implement a desirable process. For another example, the model can receive a request to structure an XML database relating to a particular process.

At 808, data related to the requested task is automatically collected and analyzed. For example, a data collection component can be declared, wherein such component reviews the industrial system the model and obtains data relating to the requested task. For instance, metadata within the industrial system model can be collected and analyzed to determine steps necessary to complete the task. More particularly, if the task is to generate an XML database, metadata relating to storage capacity can be collected and analyzed together with components that are employed to structure XML databases. At 810, a determination is made regarding whether there is sufficient data (e.g., metadata, resources, ...) within the model to complete the requested task. If sufficient data exists, then the model and/or the industrial system are automatically configured to complete the task at 812. For example, if the requested task is to complete an XML database, such database can be automatically configured based upon the request and the collected data.

If there is insufficient data to complete the task, at 814 a user is provided with a set of alternatives. For example, if the request was to generate an XML database but the resources available only allow for creation of a SQL database, the user can be automatically asked if generation of the SQL database is an acceptable alternative. A graphical user interface can be employed to provide the user with a list of alternative(s). In another example, a request can be to complete a manufacturing process at a first location within a plant, wherein there exists insufficient machinery at such first location. Thereafter the user can be provided with one or more alternative(s), such as a second location wherein the requested manufacturing process can be completed.

At 816 the user decides whether one of the alternatives provided at 814 is acceptable. If one of the provided alternatives is acceptable, then the user can select such alternative and the system is automatically configured at 812 according to the selected alternative. Otherwise, the user is provided with instructions that enable completion of the requested task at 818. The collection and analysis of data at 808 enables the methodology 800 to provide the user with instructions and/or resources required to complete a task. For instance, if there does not exist sufficient defmed linkages to generate an XML database, then the user can be asked to provide such linkages to enable creation of the XML database.

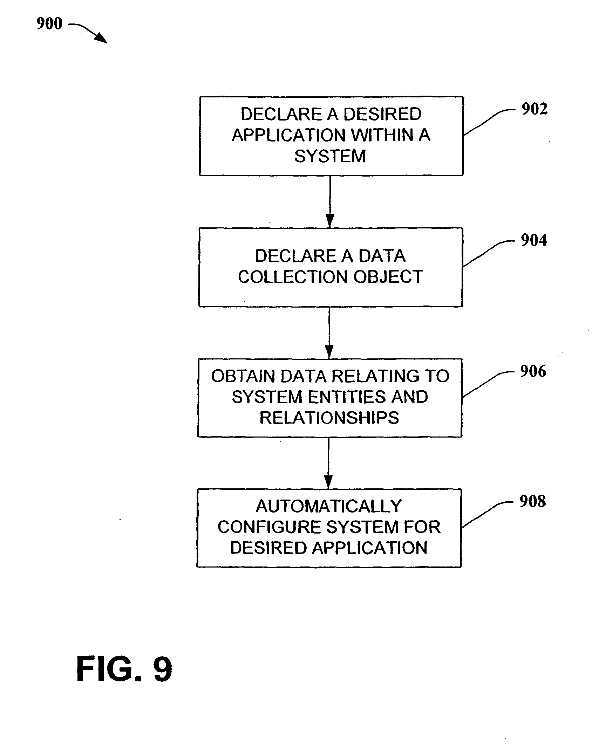

Now referring to Fig. 9, a methodology 900 for utilizing an automation platform as a declarative model is illustrated. At 902, a desirable application is declared within an automation platform that includes a model of an industrial system. For example, the desirable application can be a manufacturing task completed within the industrial system and/or a computer-based task, such as generating a database structure for analysis of at least a portion of the industrial system. In accordance with one aspect of the present invention, this application can be declared *via* a request by a user. At 904, a data collection object can be declared to enable collection of data relating to the declared application. Such data collection object can be declared automatically within the automation platform and or manually by a user. For example, the user can request that data be collected relating to a particular process, machine, PLC, *etc.*

At 906, the data collection object searches over the automation platform as well as over the industrial system to collect data pertinent to the declared application (e.g., data relating to industrial system entities and relationships is obtained, as well as data relating to the automation platform). For instance, if the declared application relates to a manufacturing task that is to be implemented by various interconnected and communicating machinery, the declared data collection object can determine what machinery exists, type of connection between machinery, review control algorithms associated with the machinery, or any other suitable related data that can be employed in connection with obtaining data related to the task. At 908, the industrial system and/or the manufacturing platform are automatically configured for the desired application. For example, machinery within the industrial system can be automatically configured and/or databases relating to a machine and/or the application can be automatically generated.

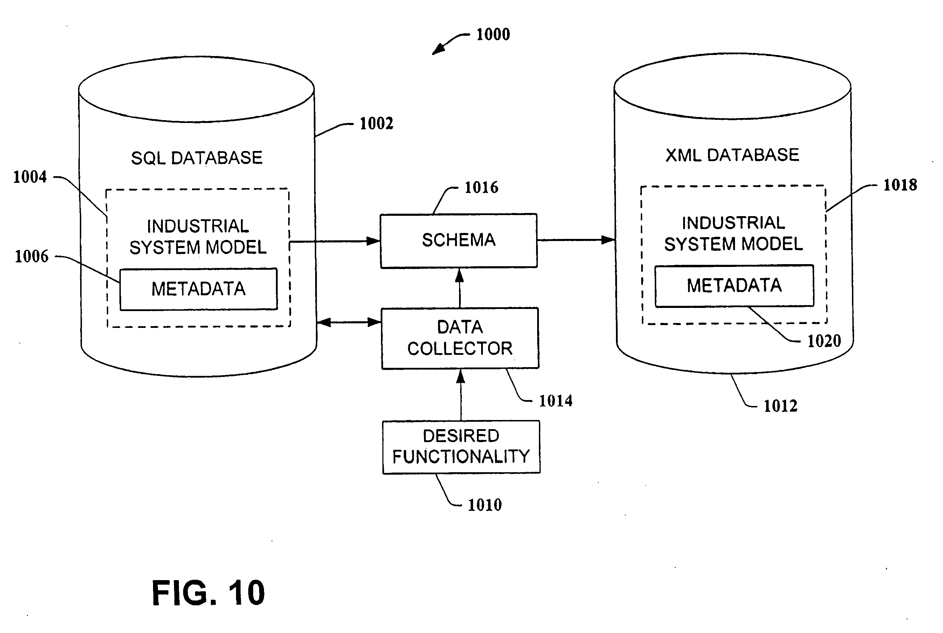

Turning now to Fig. 10, an exemplary transformation 1000 of an industrial system model from a first data structure to a second data structure is illustrated. An SQL database 1002 includes an industrial system model 1004 that is utilized in connection with configuring an industrial system as described above. The industrial system model 1004 includes metadata 1006 that describes/defines associations of machinery within the industrial system as well as associations between objects/applications existent within the industrial system model 1004. For example, the industrial system model 1004 can include various software applications (e.g., spreadsheet application, word processing application, ...), and the metadata 1006 can describe/define associations between such applications. Furthermore, the metadata 1006 can describe/define resources associated with the industrial system and/or resources associated with the industrial system model 1004. For instance, software applications within the industrial system model 1004 can be associated with a processor that has finite resources.

In accordance with one aspect of the present invention, a desired functionality 1010 is determined. In the displayed exemplary transformation 1000, the desired functionality 1010 is a transformation of the SQL database 1002 into an XML database 1012. While the illustrated transformation involves transforming an SQL database into an XML database, it is to be understood that any suitable transformation between database structures can be accomplished through utilization of metadata in accordance with the present invention. The desired functionality 1010 can be entered by a user after booting of a machine, or can be automatically bootstrapped to a service call (e.g., a hard disk boot). Therefore, whenever the service call is received, the desired functionality 1010 is performed. A data collector 1014 is employed to collect data from the SQL database 1002 that enables transformation of the SQL database to the XML database 1012. For example, the data collector 1014 can be declared as such within a declarative industrial automation platform. Further, if insufficient data exists to complete the desired transformation, a user can be provided with alternative(s) and/or instruction(s) to facilitate such transformation as illustrated with respect to methodology 800 (Fig. 8).

Upon collection of requisite data by the data collector 1014, a schema 1016 is provided to transform the SQL database 1002 into the XML database 1012. In accordance with one aspect of the present invention, the schema 1016 employs a standard (e.g., ISA 95, ISA 88, ...) to enable common semantics to be employed between the SQL database 1002 and the XML database 1012. Further, the schema 1016 includes intelligent components that can automatically generate software portions associated with the industrial system model 1004 to facilitate desirable transformation to an XML-based industrial system model 1018. For example, the schema 1016 can automatically generate a database instance, C sharp assemblies, set up icon depositories for icons employed for visualization purposes, *etc.* The resultant database 1012 ill include the industrial model 1018 and metadata 1020 associated with the industrial model 1018 in a desired format. For example, the XML database may be desirable due to an ability to view contents of such database on a conventional browser at disparate geographic locations. Thus, the entire industrial system model 1004 can be automatically transformed to a desirable format *via* analyzing the metadata 1006 without requiring manual structuring of a new database in the desirable format.

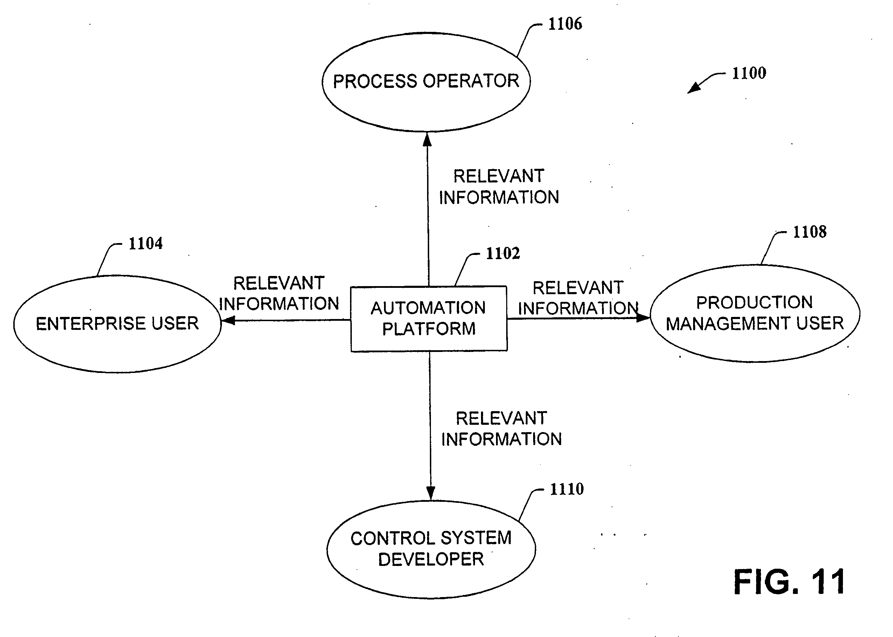

Now referring to Fig. 11, an exemplary embodiment 1100 illustrating filtering technologies of the present invention is shown. An automation platform 1102 is accessible by a plurality of users, both for software development and industrial applications. Particularly, in the exemplary embodiment 1100 an enterprise user 1104, a process operator 1106, a production management user 1108, and a control system developer 1110 are all concurrently accessing the automation platform 1102. The users 1102 - 1110 can be all located at a single manufacturing plant, or distributed geographically at disparate manufacturing plants, wherein the automation platform 1102 facilitates configuration/automation of a distributed manufacturing environment. The users 1102 - 1110 all desire to access/modify disparate portions of the automation platform 1102, which includes metadata (not shown) describing/defining the automation platform 1102 as previously disclosed. Thus, providing each of the users 1102-1110 with an entirety of the automation platform 1102 would be overwhelming due to completeness of a system representation (not shown) within the automation platform 1102.

Conventionally, filters could be manually built for particular users, thereby providing a user only with data that is required for task(s) that such user generally undertakes. In accordance with the present invention, filters for the respective users 1102 - 1110 can be automatically generated based upon metadata associated with the users 1102 - 1110, the industrial system represented within the automation platform 1102, and the automation platform 1102 itself. Thus, the enterprise user 1104 is only provided with information pertinent to such user 1104, the process operator 1106 is only provided with information pertinent to the process operator 1106, etc. Generating filters based upon metadata allows for a more intelligent representation of the automation platform 1102 to be delivered to each user when compared to conventional filters, which are inflexible and not adaptive to changes associated with an industrial system, automation platform, and/or user alterations.

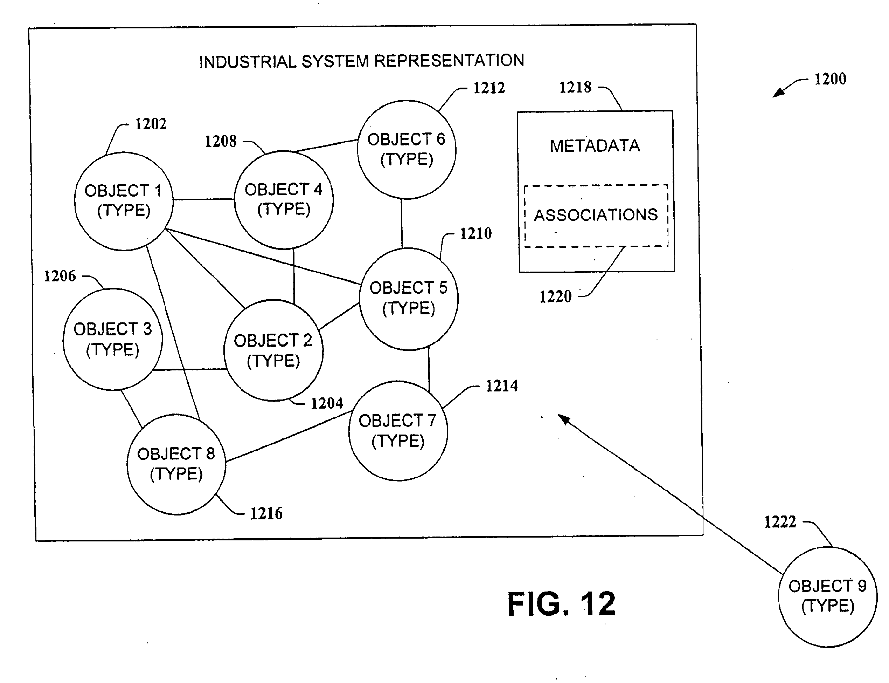

Now referring to Fig. 12, an exemplary industrial system representation 1200 in accordance with the present invention is illustrated. The industrial system representation 1200 includes a plurality of software objects 1202 - 1216 of multiple types. Such objects 1202 - 1216 are described/defined within the objects as well as within metadata 1218 related to the objects 1202 - 1216. Particularly, the metadata 1218 can include data relating to a plurality of associations 1220, where the associations 1220 describe relatedness between the objects 1202 - 1216. In accordance with one aspect of the present invention, the associations 1220 can be a links table. Thus, if a new object 1222 is added to the system representation 1200, the associations 1220 (e.g., the links table) can be updated accordingly.

Further, the system representation 1200 provides inheritance capabilities between the objects, and the metadata can define inheritance between objects and the associations 1220 can include links between inherited objects. This provides a much more powerful metadata model than conventional metadata-related systems/methodologies. Particularly, data relating to inheritance within the metadata 1218 makes building applications easier, and gives another dimension in which to manipulate data. Further, automatic ordering of objects is more efficient than manually programming such hierarchy in a data structure. The system representation 1200 illustrates the objects 1202 - 1216 linked together according to a type of association. Such links can be horizontal links (e.g., an association not involving inheritance), vertical links (e.g., an association involving inheritance), or any other suitable relation that can exist between objects.

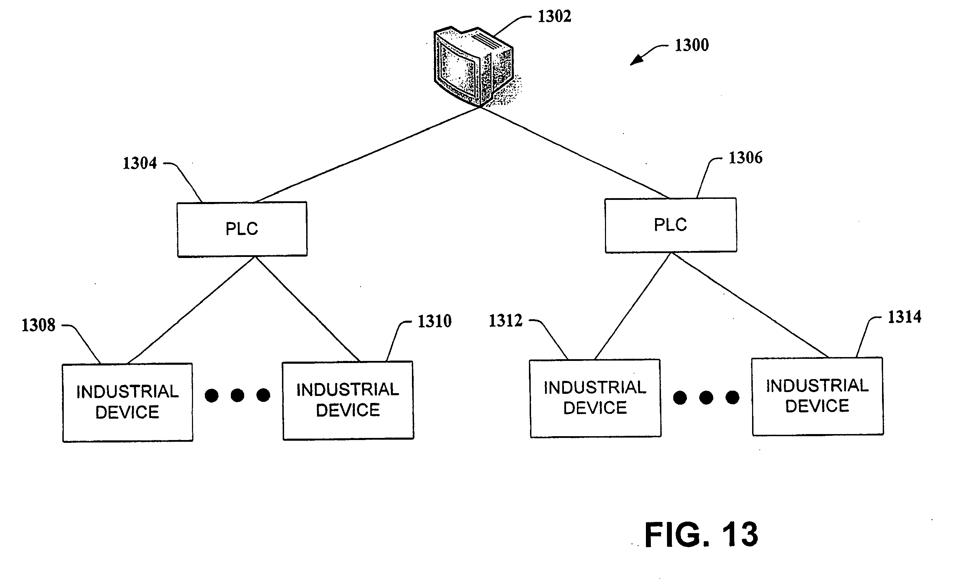

Turning now to Fig. 13, an exemplary industrial environment 1300 utilized in connection with an automation platform of the present invention is illustrated. An automation platform is stored within a computing environment 1302, which facilitates automatically configuring and/or automating one or more industrial machine(s)/process(es). The automation platform includes a data collection component that obtains data relating to the industrial environment. Particularly, in the industrial environment 1300 there exists PLCs 1304 and 1306 and a plurality of industrial devices controlled thereby. Particularly, PLC 1304 is connected to and facilitates control of a first industrial device 1308 through an Nth industrial device 1310, where N is an integer greater than 1. PLC 1306 is connected to and facilitates control of a disparate industrial device 1312 through an Mth industrial device 1314, where M is an integer greater than 1. The data collection component can obtain information relating to physical connection of the PLCs 1304 and 1306 with the industrial devices 1308 - 1314. Further, the data collection component can obtain information relating to applications resident upon the industrial devices 1308 - 1314, communication protocols employed in connection with the industrial devices 1308 - 1314, and any other suitable information relating to the industrial devices 1308 - 1314.

The automation platform can thereafter configure the PLCs 1304 and 1306 to provide the industrial devices 1308 - 1314 with control software and generate communication interfaces between the PLCs 1304 and 1306 and the industrial devices 1308 - 1314. Moreover, user interfaces enabling optimal operation of the industrial devices 1308 - 1314 can be provided to a user. In accordance with one aspect of the present invention, the PLC 1304 and the PLC 1306 can be located at disparate geographical locations, but be configured through a central automation platform. This machinery in disparate locations can be configured to communicate with one another and complete process(es) *via* the automation platform.

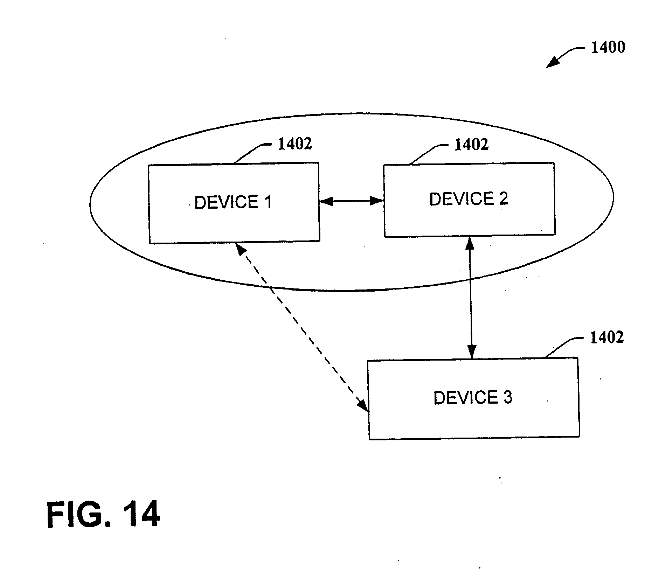

Referring now to Fig. 14, an exemplary configuration 1400 between devices in an industrial environment is illustrated. A first device 1402 and a second device 1404 are configured to interact with one another. For example, communications are enabled between the first device 1402 and the second device 1404. Similarly, the first device 1402 and the second device 1404 can act conjunctively to complete a process. Thereafter, a third device 1406 can be configured to communicate with and/or operate in conjunction with the second device 1404. Thereafter it may be desirable to configure the first device 1402 with respect to the third device 1406. A data collection component (not shown) can be employed to obtain data relating to the three devices 1402 - 1406, and configuration amongst such devices can occur automatically. In accordance with another aspect of the present invention, data relating to the three devices 1402 - 1406 can already have been obtained by a data collection component. Thereafter, a user can declare that it would be desirable to configure the first device 1402 with the second device 1404 (e.g., rendering an automation platform as a declarative model). At a later time, as all the data is collected, the third device 1406 can be configured with the second device 1404 and/or the first device 1402 *via* a request or declaration. Such an aspect of the present invention provides for an extensible declarative automation platform utilizable in connection with an industrial environment.

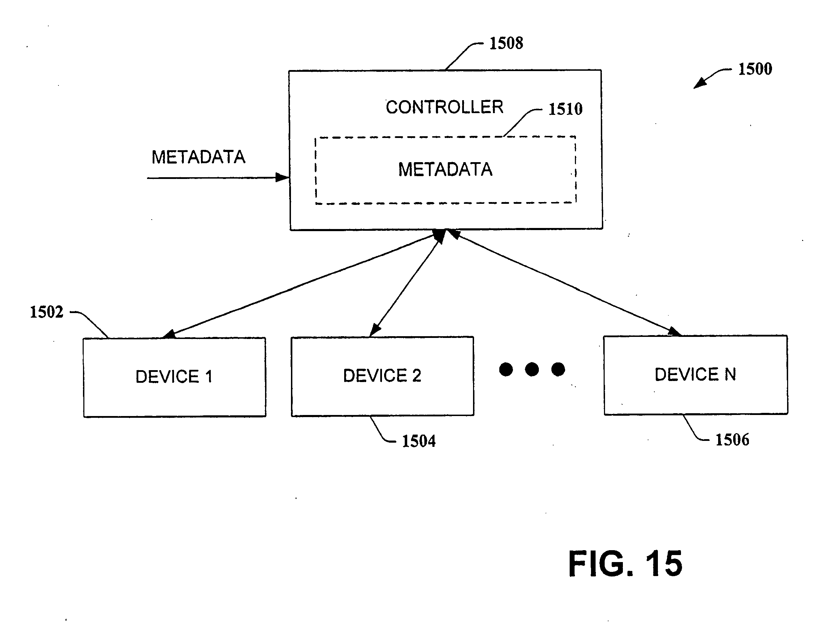

Turning to Fig. 15, an exemplary system 1500 that facilitates control of one or more machine(s) to effectuate an industrial process is illustrated. The system 1500 includes a plurality of devices 1502 - 1506. Specifically, the system 1500 comprises a first device 1502 through an Nth device 1506, where N is an integer greater than 2. The devices 1502 - 1506 are controlled by a controller 1508 that utilizes metadata 1510 in connection with controlling the devices 1502 - 1506. Further, additional metadata can be accessed by the controller 1508 from a metadata store (not shown). In such a metadata rich environment as described above, the controller 1508 can make more intelligent decisions when compared to conventional controllers. Further, metadata created by the devices 1502 - 1506 can be directed to the controller 1508 to provide additional metadata to the controller 1508 for use in controlling such devices 1502 - 1506. As metadata is continuously added and accessed by the controller 1508, the controller 1508 can make increasingly intelligent decisions and adapt to alterations relating to the devices 1502 - 1506.

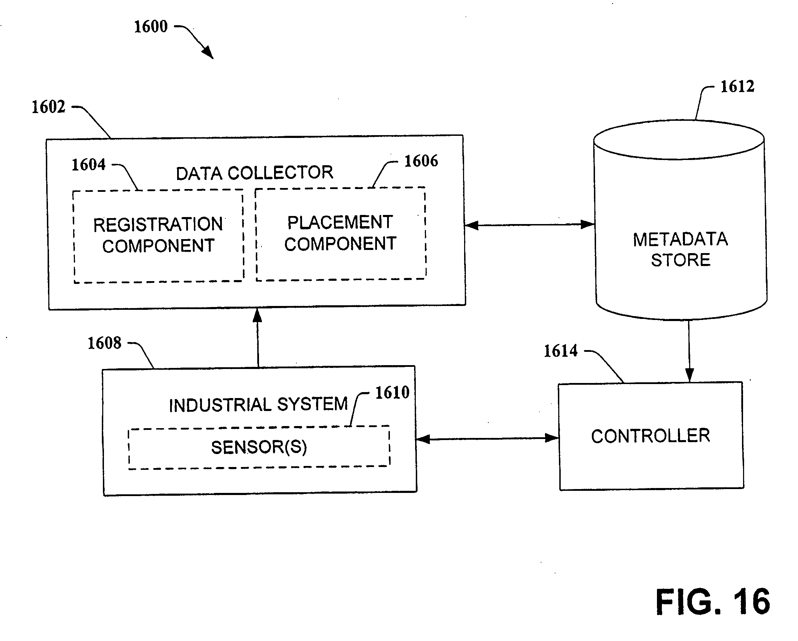

Now turning to Fig. 16, a system 1600 that facilitates metadata collection and/or generation within an industrial system automation platform is illustrated. The system 1600 is an extensible system, wherein the more metadata that is collected/generated, the more structured and more intelligent the system 1600 and parts thereof become. The system 1600 includes a data collector 1602 that facilitates collection and organization of metadata. Particularly, the data collector includes a registration component 1604 and a placement component 1606, wherein the registration component registers incoming metadata from an industrial system 1608 (e.g., configures associations between the received metadata and existent metadata). For example, the data collector 1602 can receive metadata from sensor(s) 1610 from within the industrial system 1608. The received metadata can describe/define process(es) undertaken within the industrial system 1608, machinery within the industrial system 1608, computer-related entities within the industrial system 1608, *etc.* Further, while not shown, an automation platform can automatically generate metadata according to application configuration and/or interfacing between the industrial system 1608 and the automation platform. Thus, data can be collected over an entire set of activities (e.g., physical system, controller, software application, ...). The data collector 1602 collects and registers the received metadata, and places it at an appropriate location within a metadata store 1612. This metadata store 1612 is accessible by a controller 1614 that facilitates control of at least a portion of the industrial system 1608. The controller 1614 further can receive data directly from the sensor(s) 1610 that is not metadata. Further, through utilization of collected metadata within the metadata store 1612 plug-and-play features are available. Specifically, through metadata a device could be "plugged in" to the industrial system 1608, and applications, databases, configurations between machines, and any other suitable steps necessary to configure the device with the industrial system 1608 can be automatically generated *via* metadata.

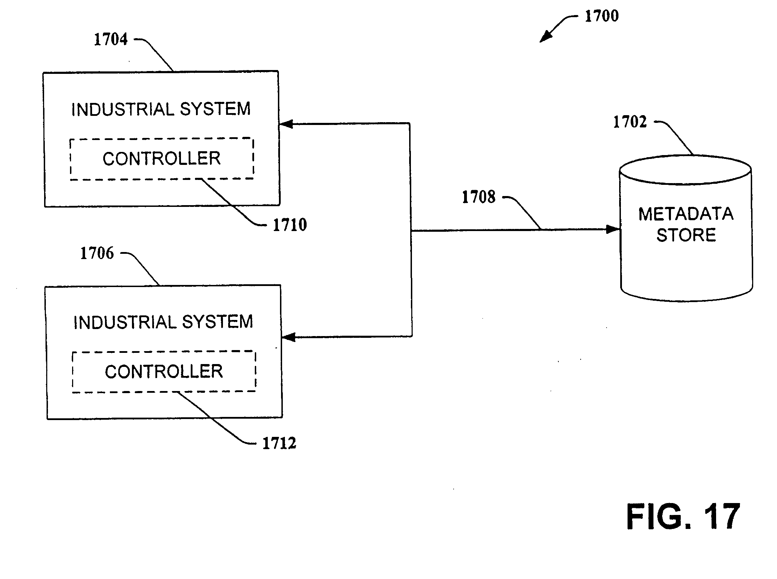

Now referring to Fig. 17, an exemplary embodiment 1700 in accordance with an aspect of the present invention is illustrated. A metadata store 1702 is accessed by two disparate industrial systems 1704 and 1706, which are located at different geographical locations. For instance, the first industrial system 1704 can be located within a factory in New York while the second industrial system 1706 can be located within a factory in Nevada. Due to advancement in communication technology, both industrial systems 1704 and 1706 can utilize the single metadata store 1702 to configure and/or automate process(es) and/or machinery within such industrial systems 1704 and 1706. In accordance with another aspect of the present invention, the metadata store 1702 can be a distributed store across various databases. The industrial systems 1704 and 1706 access the metadata store 1702 through any suitable network connection 1708. For example, the network connection can be a T1 connection, Ethernet connection, or any other suitable wireless and/or wireline connection. The industrial systems 1704 and 1706 include controllers 1710 and 1712, respectively, and access the metadata store 1702 *via* the network connection to facilitate control of process(es) and/or machinery within the industrial systems 1704 and 1706. Furthermore, the industrial systems 1704 and 1706 (and controllers 1710 and 1712) can be employed to add metadata to the metadata store 1702. As amount of metadata increases, the controllers 1710 and 1712 will be able to make more intelligent decisions in connection with controlling portions of the industrial systems 1704 and 1706.

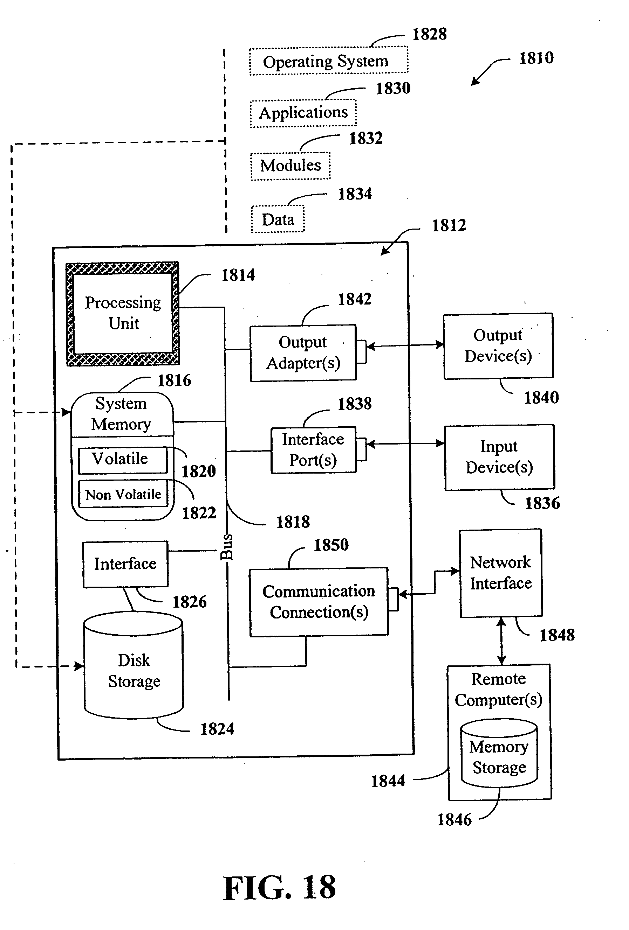

With reference to Fig.18, an exemplary environment 1810 for implementing various aspects of the invention includes a computer 1812. The computer 1812 includes a processing unit 1814, a system memory 1816, and a system bus 1818. The system bus 1818 couples system components including, but not limited to, the system memory 1816 to the processing unit 1814. The processing unit 1814 can be any of various available processors. Dual microprocessors and other multiprocessor architectures also can be employed as the processing unit 1814.

The system bus 1818 can be any of several types of bus structure(s) including the memory bus or memory controller, a peripheral bus or external bus, and/or a local bus using any variety of available bus architectures including, but not limited to, 11-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 1816 includes volatile memory 1820 and nonvolatile memory 1822. The basic input/output system (BIOS), containing the basic routines to transfer information between elements within the computer 1812, such as during start-up, is stored in nonvolatile memory 1822. By way of illustration, and not limitation, nonvolatile memory 1822 can include read only memory (ROM), programmable ROM (PROM), electrically programmable ROM (EPROM), electrically erasable ROM (EEPROM), or flash memory. Volatile memory 1820 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 1812 also includes removable/non-removable, volatile/non-volatile computer storage media. Fig. 18 illustrates, for example a disk storage 1824. Disk storage 1824 includes, but is not limited to, devices like a magnetic disk drive, floppy disk drive, tape drive, Jaz drive, Zip drive, LS-100 drive, flash memory card, or memory stick. In addition, disk storage 1824 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 1824 to the system bus 1818, a removable or non-removable interface is typically used such as interface 1826.

It is to be appreciated that Fig. 18 describes software that acts as an intermediary between users and the basic computer resources described in suitable operating environment 1810. Such software includes an operating system 1828. Operating system 1828, which can be stored on disk storage 1824, acts to control and allocate resources of the computer system 1812. System applications 1830 take advantage of the management of resources by operating system 1828 through program modules 1832 and program data 1834 stored either in system memory 1816 or on disk storage 1824. It is to be appreciated that the present invention can be implemented with various operating systems or combinations of operating systems.

A user enters commands or information into the computer 1812 through input device(s) 1836. Input devices 1836 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1814 through the system bus 1818 *via* interface port(s) 1838. Interface port(s) 1838 include, for example, a serial port, a parallel port, a game port, and a universal serial bus (USB). Output device(s) 1840 use some of the same type of ports as input device(s) 1836. Thus, for example, a USB port may be used to provide input to computer 1812, and to output information from computer 1812 to an output device 1840. Output adapter 1842 is provided to illustrate that there are some output devices 1840 like monitors, speakers, and printers, among other output devices 1840, which require special adapters. The output adapters 1842 include, by way of illustration and not limitation, video and sound cards that provide a means of connection between the output device 1840 and the system bus 1818. It should be noted that other devices and/or systems of devices provide both input and output capabilities such as remote computer(s) 1844.

Computer 1812 can operate in a networked environment using logical connections to one or more remote computers, such as remote computer(s) 1844. The remote computer(s) 1844 can be a personal computer, a server, a router, a network PC, a workstation, a microprocessor based appliance, a peer device or other common network node and the like, and typically includes many or all of the elements described relative to computer 1812. For purposes of brevity, only a memory storage device 1846 is illustrated with remote computer(s) 1844. Remote computer(s) 1844 is logically connected to computer 1812 through a network interface 1848 and then physically connected *via* communication connection 1850. Network interface 1848 encompasses communication networks such as local-area networks (LAN) and wide-area networks (WAN). LAN technologies include Fiber Distributed Data Interface (FDDI), Copper Distributed Data Interface (CDDI), Ethernet/IEEE 1102.3, Token Ring/IEEE 1102.5 and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 1850 refers to the hardware/software employed to connect the network interface 1848 to the bus 1818. While communication connection 1850 is shown for illustrative clarity inside computer 1812, it can also be external to computer 1812. The hardware/software necessary for connection to the network interface 1848 includes, for exemplary purposes only, internal and external technologies such as, modems including regular telephone grade modems, cable modems and DSL modems, ISDN adapters, and Ethernet cards.

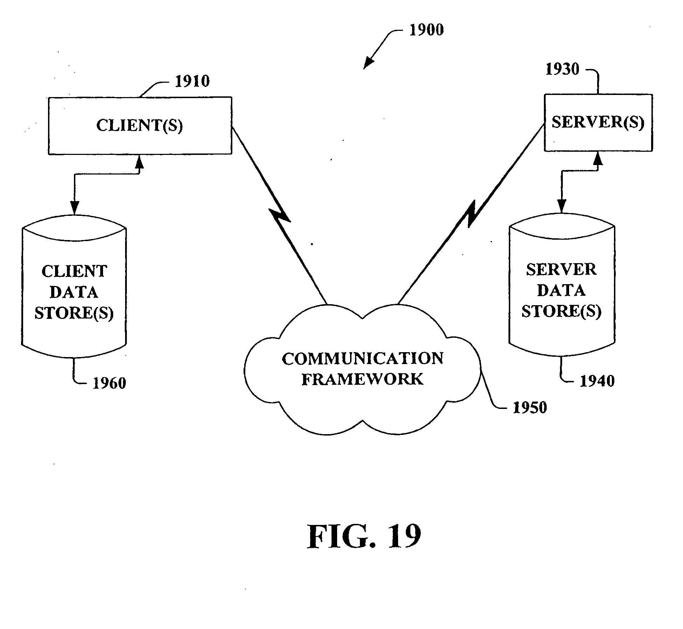

Fig. 19 is a schematic block diagram of a sample-computing environment 1900 with which the present invention can interact. The system 1900 includes one or more client(s) 1910. The client(s) 1910 can be hardware and/or software (e.g., threads, processes, computing devices). The system 1900 also includes one or more server(s) 1930. The server(s) 1930 can also be hardware and/or software (e.g., threads, processes, computing devices). The servers 1930 can house threads to perform transformations by employing the present invention, for example. One possible communication between a client 1910 and a server 1930 can be in the form of a data packet adapted to be transmitted between two or more computer processes. The system 1900 includes a communication framework 1950 that can be employed to facilitate communications between the client(s) 1910 and the server(s) 1930. The client(s) 1910 are operably connected to one or more client data store(s) 1960 that can be employed to store information local to the client(s) 1910. Similarly, the server(s) 1930 are operably connected to one or more server data store(s) 1940 that can be employed to store information local to the servers 1930.

What has been described above includes examples of the present invention. It is, of course, not possible to describe every conceivable combination of components or methodologies for purposes of describing the present invention, but one of ordinary skill in the art may recognize that many further combinations and permutations of the present invention are possible. Accordingly, the present invention is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

In summary the invention discloses an industrial system configuration platform facilitating automation of an industrial system. The industrial system configuration platform comprises a representation of the industrial system and a configuration component that automatically configures at least a portion of the industrial system based at least in part upon metadata that describes the representation. A physical device can be automatically configured based at least in part upon the metadata, and a database can be generated and structured based at least in part upon the metadata. The industrial system configuration platform further enables an industrial process to be implemented based at least in part upon the metadata.

## Claims

1. A system (100) that automates an industrial system (102), the system comprising:
a representation (106) of the industrial system, wherein the representation represents entities (108) within the industrial system (102) by employing metadata (110) associated with the industrial system as well as software objects (102), wherein the metadata is data that describes data, wherein the metadata includes data that defines associations between the industrial system entities (108), as well as definitions and representations of industrial processes that occur within the industrial system; and
a configuration component (112) that analyzes the system representation (106) and automatically configures at least a portion of the industrial system based at least in part upon metadata (110) that describes the industrial system (102),
wherein if an alteration within the industrial system is sensed, the system further comprises means to: (a) modify (506) the representation of the industrial system based at least in part upon the sensed alteration; (b) receive (508) metadata associated with the sensed alteration; (c) analyze (510) by the configuration component the metadata with respect to the altered industrial system; and (d) automatically configuring by the configuration component the industrial system in accordance with the analysis.

2. The system of claim 1, a physical device automatically configured based at least in part upon the metadata.

3. The system of claim 1 or 2, a database automatically configured based at least in part upon the metadata.

4. The system of claim 1, 2 or 3 an industrial process implemented based at least in part upon the metadata.

5. The system of one of claims 1 to 4, a graphical user interface generated based at least in part upon the metadata.

6. The system of one of claims 1 to 5, further comprising a controller that employs the metadata to control machinery within the industrial system.

7. The system of one of claims 1 to 6, the metadata describes associations between objects utilized to create the system representation, at least a portion of the industrial system configured based at least in part upon the described associations.

8. The system of claim 1, the metadata describes associations between one or more of industrial device(s), industrial process(es), and computer-related devices within the industrial system, at least a portion of the industrial system configured based at least in part upon the described associations.

9. The system of claim 8, one or more links tables utilized to describe the associations between the objects utilized to create the system representation.

10. The system of one of claims 1 to 9, the metadata describes resources allocated amongst objects utilized to create the system representation, at least a portion of the industrial system configured based at least in part upon the described resources.

11. The system of one of claims 1 to 10, the metadata describes resources associated with one or more of industrial devices, industrial process(es), and computer-related devices within the industrial system, at least a portion of the industrial system configured based at least in part upon the described resources.

12. The system of one of claims 1 to 11, further comprising a schema that facilitates communication between the platform and the industrial system.

13. The system of claim 12, the schema employs one or more of an ISA 95 and an ISA 88 standard.

14. The system of one of claims 1 to 13, further comprising a manufacturing framework that facilitates communication between the industrial system and the platform.

15. The system of claim 14, the manufacturing framework comprises one or more of a reporting framework, a collaboration framework, and a portal framework.

16. The system of one of claims 1 to 15, further comprising a transformation component that transforms the platform from a first format to a second format.

17. The system of claim 1, further comprising means that facilitates efficient viewing of data relating to an industrial environment, the means comprising:
a metadata driven industrial automation platform; and
a filter that selectively filters data within the platform and delivers filtered data to a user based at least in part upon metadata within the platform and user characteristics.

18. A method for automatically configuring at least a portion of an industrial system, comprising:
generating a representation of the industrial system; receiving metadata associated with the industrial system;
describing associations between devices within the industrial system via the metadata,
wherein the representation represents entities (108) within the industrial system (102) by employing the received metadata (110) associated with the industrial system as well as software objects (102), wherein the metadata is data that describes data, wherein the metadata includes data that defines associations between the industrial system entities (108), as well as definitions and representations of industrial processes that occur within the industrial system; and
configuring a machine within the industrial system, wherein the configuration is made through a configuration component (112) that analyzes the system representation (106) and automatically configures the machine in the industrial system based at least in part upon a user request and the received metadata,
wherein if an alteration within the industrial system is sensed, the system method further comprises: (a) modifying (506) the representation of the industrial system based at least in part upon the sensed alteration; (b) receiving (508) metadata associated with the sensed alteration; (c) analyzing (510) by the configuration component the metadata with respect to the altered industrial system; and (d) automatically configuring by the configuration component the industrial system in accordance with the analysis.

19. The method of claim 18, further comprising describing resources associated with devices within the industrial system via the metadata.

## Patentansprüche

1. System (100), das ein industrielles System (102) automatisiert, wobei das System Folgendes umfasst:
eine Repräsentation (106) des industriellen Systems, wobei die Repräsentation Entitäten (108) in dem industriellen System (102) durch Verwendung von Metadaten (110), die dem industriellen System zugeordnet sind, sowie von Softwareobjekten (102) repräsentiert, wobei die Metadaten Daten sind, die Daten beschreiben, wobei die Metadaten Daten umfassen, die Zuordnungen zwischen den industriellen Systementitäten (108) sowie Definitionen und Repräsentationen von industriellen Prozessen, die in dem industriellen System stattfinden, definieren; und
eine Konfigurationskomponente (112), die die Systemrepräsentation (106) analysiert und mindestens einen Teil des industriellen Systems mindestens teilweise auf der Basis von Metadaten (110), die das industrielle System (102) beschreiben, automatisch konfiguriert,
wobei, wenn eine Änderung in dem industriellen System erfasst wird, das System ferner Mittel für Folgendes umfasst: (a) Modifizieren (506) der Repräsentation des industriellen Systems mindestens teilweise auf der Basis der erfassten Änderung; (b) Empfangen (508) von Metadaten, die der erfassten Änderung zugeordnet sind; (c) Analysieren (510) der Metadaten durch die Konfigurationskomponente mit Bezug auf das geänderte industrielle System; und (d) automatisches Konfigurieren des industriellen Systems durch die Konfigurationskomponente gemäß der Analyse.

2. System nach Anspruch 1, wobei eine physische Einrichtung automatisch mindestens teilweise auf der Basis der Metadaten konfiguriert wird.

3. System nach Anspruch 1 oder 2, wobei eine Datenbank automatisch mindestens teilweise auf der Basis der Metadaten konfiguriert wird.

4. System nach Anspruch 1, 2 oder 3, wobei ein industrieller Prozess mindestens teilweise auf der Basis der Metadaten implementiert wird.

5. System nach einem der Ansprüche 1 bis 4, wobei eine grafische Benutzeroberfläche mindestens teilweise auf der Basis der Metadaten erzeugt wird.

6. System nach einem der Ansprüche 1 bis 5, das ferner eine Steuerung umfasst, die die Metadaten zum Steuern von Maschinen in dem industriellen System verwendet.

7. System nach einem der Ansprüche 1 bis 6, wobei die Metadaten Zuordnungen zwischen zum Erzeugen der Systemrepräsentation benutzten Objekten beschreiben, wobei mindestens ein Teil des industriellen Systems mindestens teilweise auf der Basis der beschriebenen Zuordnungen konfiguriert wird.

8. System nach Anspruch 1, wobei die Metadaten Zuordnungen zwischen industriellen Einrichtung(en) und/oder industriellen Prozess(en) und/oder computerbezogenen Einrichtungen in dem industriellen System beschreiben, wobei mindestens ein Teil des industriellen Systems mindestens teilweise auf der Basis der beschriebenen Zuordungen konfiguriert wird.

9. System nach Anspruch 8, wobei eine oder mehrere zum Beschreiben der Zuordnungen zwischen den Objekten benutzten Verknüpfungstabellen zum Erzeugen der Systemrepräsentation benutzt werden.

10. System nach einem der Ansprüche 1 bis 9, wobei die Metadaten Betriebsmittel beschreiben, die unter zum Erzeugen der Systemrepräsentation benutzten Objekten vergeben werden, wobei mindestens ein Teil des industriellen Systems mindestens teilweise auf der Basis der beschriebenen Betriebsmittel konfiguriert wird.

11. System nach einem der Ansprüche 1 bis 10, wobei die Metadaten Betriebsmittel beschreiben, die industriellen Einrichtungen und/oder (einem) industriellen Prozess(en) und/oder computerbezogenen Einrichtungen in dem industriellen System zugeordnet sind, wobei mindestens ein Teil des industriellen Systems mindestens teilweise auf der Basis der beschriebenen Betriebsmittel konfiguriert wird.

12. System nach einem der Ansprüche 1 bis 11, das ferner ein Schema umfasst, das Kommunikation zwischen der Plattform und dem industriellen System ermöglicht.

13. System nach Anspruch 12, wobei das Schema den Standard ISA 95 und/oder ISA 88 verwendet.

14. System nach einem der Ansprüche 1 bis 13, das ferner einen Produktionsrahmen umfasst, der Kommunikation zwischen dem industriellen System und der Plattform ermöglicht.

15. System nach Anspruch 14, wobei der Produktionsrahmen einen Melderahmen und/oder einen Kollaborationsrahmen und/oder einen Portalrahmen umfasst.

16. System nach einem der Ansprüche 1 bis 15, das ferner eine Transformationskomponente umfasst, die die Plattform aus einem ersten Format in ein zweites Format transformiert.

17. System nach Anspruch 1, das ferner ein Mittel umfasst, das effizientes Betrachten der Daten in Bezug auf eine industrielle Umgebung ermöglicht, wobei das Mittel Folgendes umfasst:
eine metadatengesteuerte industrielle Automatisierungsplattform; und
ein Filter, das selektiv Daten in der Plattform filtert und gefilterte Daten mindestens teilweise auf der Basis von Metadaten in der Plattform und Benutzereigenschaften an einen Benutzer abliefert.

18. Verfahren zum automatischen Konfigurieren mindestens eines Teils eines industriellen Systems, umfassend:
Erzeugen einer Repräsentation eines industriellen Systems;
Empfangen von dem industriellen System zugeordneten Metadaten;
Beschreiben von Zuordnungen zwischen Einrichtungen in dem industriellen System über die Metadaten,
wobei die Repräsentation Entitäten (108) in dem industriellen System (102) durch Verwendung der empfangenen Metadaten (110), die dem industriellen System zugeordnet sind, sowie von Softwareobjekten (102) repräsentiert, wobei die Metadaten Daten sind, die Daten beschreiben, wobei die Metadaten Daten umfassen, die Zuordnungen zwischen den industriellen Systementitäten (108) sowie Definitionen und Repräsentationen von industriellen Prozessen, die in dem industriellen System stattfinden, definieren;
Konfigurieren einer Maschine in dem industriellen System, wobei die Konfiguration durch eine Konfigurationskomponente (112) erfolgt, die die Systemrepräsentation (106) analysiert und die Maschine in dem industriellen System mindestens teilweise auf der Basis einer Benutzeranforderung und der empfangenen Metadaten automatisch konfiguriert,
wobei, wenn eine Änderung in dem industriellen System erfasst wird, das System ferner Folgendes umfasst: (a) Modifizieren (506) der Repräsentation des industriellen Systems mindestens teilweise auf der Basis der erfassten Änderung; (b) Empfangen (508) von Metadaten, die der erfassten Änderung zugeordnet sind; (c) Analysieren (510) der Metadaten durch die Konfigurationskomponente mit Bezug auf das geänderte industrielle System; und (d) automatisches Konfigurieren des industriellen Systems durch die Konfigurationskomponente gemäß der Analyse.

19. Verfahren nach Anspruch 18, das ferner das Beschreiben von Einrichtungen in dem industriellen System zugeordneten Betriebsmitteln über die Metadaten umfasst.

## Revendications

1. Système (100) qui automatise un système industriel (102), le système comprenant :
une représentation (106) du système industriel, la représentation représentant des entités (108) dans le système industriel (102) en employant des métadonnées (110) associées au système industriel ainsi que des objets logiciels (102), dans lequel les métadonnées sont des données qui décrivent des données, les métadonnées comportant des données qui définissent des associations entre les entités (108) du système industriel, ainsi que des définitions et représentations de processus industriels qui se produisent dans le système industriel ; et
un composant de configuration (112) qui analyse la représentation (106) du système et configure automatiquement au moins une partie du système industriel en fonction au moins en partie de métadonnées (110) qui décrivent le système industriel (102),
dans lequel si une altération dans le système industriel est détectée, le système comprend en outre un moyen pour : (a) modifier (506) la représentation du système industriel en fonction au moins en partie de l'altération détectée ; (b) recevoir (508) des métadonnées associées à l'altération détectée ; (c) analyser (510) avec le composant de configuration les métadonnées relativement au système industriel altéré ; et (d) configurer automatiquement avec le composant de configuration le système industriel en fonction de l'analyse.

2. Système selon la revendication 1, comprenant un dispositif physique configuré automatiquement en fonction au moins en partie des métadonnées.

3. Système selon la revendication 1 ou 2, comprenant une base de données configurée automatiquement en fonction au moins en partie des métadonnées.

4. Système selon la revendication 1, 2 ou 3, comprenant un processus industriel mis en oeuvre en fonction au moins en partie des métadonnées.

5. Système selon l'une quelconque des revendications 1 à 4, comprenant une interface utilisateur graphique générée en fonction au moins en partie des métadonnées.

6. Système selon l'une quelconque des revendications 1 à 5, comprenant en outre un contrôleur qui emploie les métadonnées afin de commander des appareils dans le système industriel.

7. Système selon l'une quelconque des revendications 1 à 6, dans lequel les métadonnées décrivent des associations entre des objets utilisés pour créer la représentation du système, au moins une partie du système industriel étant configurée en fonction au moins en partie des associations décrites.

8. Système selon la revendication 1, dans lequel les métadonnées décrivent des associations entre un ou plusieurs de dispositifs industriels, de processus industriels, et de dispositifs de nature informatique dans le système industriel, au moins une partie du système industriel étant configurée en fonction au moins en partie des associations décrites.

9. Système selon la revendication 8, comprenant une ou plusieurs tables de liaisons utilisées pour décrire les associations entre les objets utilisés pour créer la représentation de système.

10. Système selon l'une quelconque des revendications 1 à 9, dans lequel les métadonnées décrivent des ressources attribuées parmi des objets utilisés pour créer la représentation du système, au moins une partie du système industriel étant configurée en fonction au moins en partie des ressources décrites.

11. Système selon l'une quelconque des revendications 1 à 10, dans lequel les métadonnées décrivent des ressources associées à un ou plusieurs de dispositifs industriels, de processus industriels, et de dispositifs de nature informatique dans le système industriel, au moins une partie du système industriel étant configurée en fonction au moins en partie des ressources décrites.

12. Système selon l'une quelconque des revendications 1 à 11, comprenant en outre un mécanisme qui facilite la communication entre la plate-forme et le système industriel.

13. Système selon la revendication 12, dans lequel le mécanisme emploie une ou plusieurs d'une norme ISA 95 et d'une norme ISA 88.

14. Système selon l'une quelconque des revendications 1 à 13, comprenant en outre une structure de fabrication qui facilite la communication entre le système industriel et la plate-forme.

15. Système selon la revendication 14, dans lequel la structure de fabrication comprend une ou plusieurs d'une structure de rapport, d'une structure de collaboration et d'une structure portail.

16. Système selon l'une quelconque des revendications 1 à 15, comprenant en outre un composant de transformation qui transforme la plate-forme d'un premier format en un second format.

17. Système selon la revendication 1, comprenant en outre un moyen qui facilite la visualisation efficace de données relatives à un environnement industriel, le moyen comprenant :
une plate-forme d'automatisme industriel pilotée par des métadonnées ; et
un filtre qui filtre sélectivement les données dans la plate-forme et délivre des données filtrées à un utilisateur en fonction au moins en partie de métadonnées dans la plate-forme et de caractéristiques d'utilisateur.

18. Procédé de configuration automatique d'au moins une partie d'un système industriel, comprenant :
la génération d'une représentation du système industriel ; la réception de métadonnées associées au système industriel ;
la description d'associations entre les dispositifs dans le système industriel par l'intermédiaire des métadonnées,
dans lequel la représentation représente des entités (108) dans le système industriel (102) en employant les métadonnées reçues (110) associées au système industriel ainsi que des objets logiciels (102), dans lequel les métadonnées sont des données qui décrivent des données, les métadonnées comportant des données qui définissent des associations entre les entités (108) du système industriel, ainsi que des définitions et représentations de processus industriels qui se produisent dans le système industriel ; et
la configuration d'un appareil dans le système industriel, la configuration étant réalisée par le biais d'un composant de configuration (112) qui analyse la représentation (106) du système et configure automatiquement l'appareil dans le système industriel en fonction au moins en partie d'une requête d'utilisateur et des métadonnées reçues,
dans lequel si une altération dans le système est détectée, le procédé du système comprend en outre : (a) la modification (506) de la représentation du système industriel en fonction au moins en partie de l'altération détectée ; (b) la réception (508) de métadonnées associées à l'altération détectée ; (c) l'analyse (510) par le composant de configuration des métadonnées relativement au système industriel altéré ; et (d) la configuration automatique par le composant de configuration du système industriel en fonction de l'analyse.

19. Procédé selon la revendication 18, comprenant en outre la description de ressources associées à des dispositifs dans le système industriel par l'intermédiaire des métadonnées.
